# EUROPEAN PATENT SPECIFICATION

(11) **EP 4 343 182 B1**
(45) Date of publication and mention of the grant of the patent: **18.11.2026**
(21) Application number: 23198567.2
(22) Date of filing: 20.09.2023
(51) Int. Cl.: F16K 11/00, F16K 31/60

(54) **VALVE CARTRIDGE FOR A SANITARY FITTING**
VENTILKARTUSCHE FÜR EINE SANITÄRARMATUR
CARTOUCHE DE SOUPAPE POUR UNE ARMATURE SANITAIRE

(30) Priority: 23.09.2022 DE 102022124547
(43) Date of publication of application: 27.03.2024
(73) Proprietor: ORAS OY, 26100 Rauma (FI)
(72) Inventor: Assenmacher, Bernd, 70567 Stuttgart (DE); Icking, Thomas, 26510 Rauma (FI)
(74) Representative: Ostertag & Partner Patentanwälte mbB

(56) References cited:
- EP-A2- 1 020 671
- WO-A1-2019/066858
- DE-A1- 102006 012 304
- US-A1- 2011 000 564
- US-B1- 6 796 544
- US-B1- 7 357 154

## Description

### BACKGROUND OF THE INVENTION

### 1. Field of the Invention

The invention concerns a valve cartridge for a sanitary fitting.

### 2. Description of the Prior Art

Water has become a precious resource and many efforts are made in order to reduce water consume not only in industrial and agricultural sectors but also in the field of sanitary installations.

In this context, it is known to provide sanitary fittings with a so called eco-stop function. A sanitary fitting with an eco-stop function provides a resistance force within the opening range of the valve of the sanitary fitting. This allows to easily open the valve towards a partially open position (eco-stop position) for a tapping situation where only a smaller water flow rate is needed, e. g. when rinsing hands or the like. When a higher water flow rate is needed the user then has to overcome this resistance force of the eco-stop function in order to fully open the valve towards its full open position with its maximum water flow rate. The resistance force in the eco-stop position provides a haptic stop which triggers a train of thought for the user whether the maximum water flow rate is really needed in a certain situation.

Such sanitary fittings with an eco-stop function are well-known and usually the eco-stop function is provided by arranging some sort of a spring element in the handle part of the fitting which glides over a rip structure provided at the base body part of the sanitary fitting. However, such systems have some disadvantages.

First many of the eco-stop functions are provided on the sanitary fitting which complicates the design of the sanitary fitting itself. Furthermore, it is not possible to later equip an already present sanitary fitting with an eco-stop function.

Furthermore, mechanisms using a spring element are subjected to wear, in particular because the spring element is normally realized in plastics which changes its elasticity over time. On the other hand, if the spring element is made of metal, often the rip structure is made of plastics due to tribology reasons. In this case, the rip structure loses its shape over the time.

From US 2011/0000564 A1 a sanitary fitting is known which comprises a joint mechanism to translate an upward lifting movement and a downward pushing movement of a lever handle to different flow positions of a valve. Namely, the downward movement activates a flow mode with a reduced flow rate and the upward movement fully opens the valve. Therefore, the sanitary fitting has to be opened differently for the different flow modes.

From US 6,796,544 B1 a sanitary fitting is known which uses a joint mechanism to translate the pivoting movement of a lever handle to a linear movement of a regulation seat. The regulation seat comprises locking tooth means engaging spring plates to provide a precise regulation of the amount of water in a stepwise manner.

US 7,357,154 B1 discloses a cartridge valve according to the preamble of claim 1.

### SUMMARY OF THE INVENTION

It is therefore an object of the present invention to provide an eco-stop mechanism differing from the one provided by spring elements in order to hopefully provide a longer durability. In particular, it is an object of the present invention to provide a valve cartridge for a sanitary fitting having an eco-stop mechanism.

This object of the invention is achieved with a valve cartridge for a sanitary fitting having
a) a housing, in which a valve is arranged,
b) an actuating lever protruding from the housing for opening and closing the valve, wherein the actuating lever is supported in a lever support part of the housing and may be swiveled from a closed position to an open position through an eco-stop position, in which the valve is only partially opened compared to the open position, and may be swiveled back from the open position towards the eco-stop position and further towards the fully closed position,
   wherein
c) the valve cartridge comprises a toggle joint mechanism arranged between the actuating lever and the housing, wherein the toggle joint mechanism comprises a dead center point through which the toggle joint mechanism has to move when swiveling the actuating lever from the eco-stop position to the open position, wherein the toggle joint mechanism has a local force maximum within the dead center point and thereby provides a counter force when swivelling the actuating lever from the eco-stop position towards the open position and vice versa.

The inventor has realized that one may provide an improved eco-stop mechanism using a toggle joint mechanism on the valve cartridge itself.

To this end, the inventor suggests to use a toggle joint mechanism instead of a spring mechanism. A toggle joint mechanism has a so called dead center point through which the system may be toggle from one to the other side of the dead center point. Within the dead center point the toggle joint mechanism has a local force maximum. By arranging the toggle joint mechanism such that its dead center point lies in between the eco-stop position and the open position, the toggle joint mechanism provides a counter force when the user opens the valve by swiveling the actuating lever from the eco-stop position towards the open position. The user thereby has to overcome a local force maximum between the eco-stop position and the open position and vice versa.

Regarding the positions of the eco-position and the open position within the movement range of the actuating lever, it is mainly relevant that the eco-position is a position in which the valve is only partially open compared to the open position. Therefore, one may configure the valve cartridge such that after overcoming the dead center point of the toggle joint mechanism the valve cartridge still provides a larger range to set the flow rate of the open position. However, often the open position is already a fully open position with only a small range in between the dead center point and a maximum swivel position of the actuating lever.

In an embodiment, the toggle joint mechanism comprises a toggle joint element which is arranged between the actuating lever and the housing and which interacts with the housing.

In principle, the toggle joint mechanism may be provided at different places of the valve cartridge. For example, one may provide a toggle joint mechanism inside the housing of the valve cartridge e.g. at the level of a control disc of a disc valve. However, as the actuating lever swivels with respect to the housing, a toggle joint mechanism is preferably realized by providing a toggle joint element interacting with the actuating lever and the housing.

In an embodiment, the toggle joint element interacts with the lever support part of the housing.

In particular, the lever support part which supports the actuating lever in a swivel point defining a swivel axis may be used as a counteracting element for the toggle joint element.

In an embodiment, the housing comprises a glide surface for the toggle joint element.

Thereby the toggle joint element may be easily assembled at the valve cartridge e.g. by clipping the toggle joint element onto the actuating lever, in particular onto a shaft portion of the actuating lever. During assembly the toggle joint element may glide along the glide surface of the housing, in particular of the lever support part.

In an embodiment, the toggle joint element comprises at least one toggle joint lever which together with the actuating lever and the housing forms the toggle joint mechanism.

The toggle joint lever provides together with the actuating lever provides legs of the toggle joint mechanism. In particular, the toggle joint lever may slide along the glide surface and end in an indentation which acts as a stop for the movement of the toggle joint lever.

In an embodiment, the valve cartridge is configured such that in the eco-stop position the actuating lever, the toggle joint lever and a stop indentation at the housing are arranged in a geometric triangle such that a counter force against an acting force of the user is provided.

The counter force provided by the triangular arrangement of the components of the toggle joint mechanism defines an eco-stop position. Because the user feels the counter force, the swiveling motion of the actuating lever is interrupted.

In an embodiment, the toggle joint element comprises two toggle joint levers arranged on opposing sides of the actuating lever.

Thereby the counter force of the toggle joint mechanism act symmetrically on the actuating lever which improves durability.

In an embodiment, the two toggle joint levers are connected by a connecting bracket.

Although other configurations for the toggle joint element may be useful, such a single-piece toggle joint element may be easily attached to the actuating lever at the valve cartridge.

In an embodiment, the connecting bracket comprises a tool recess for inserting a tool, in particular a screw driver, to remove the toggle joint element from the valve cartridge.

By this a user who does not desire the eco-stop function of the valve cartridge may easily convert the valve cartridge to one without the eco-stop position. Furthermore, the toggle joint element may be easily replaced in case of wear or malfunctioning.

In an embodiment, a second toggle joint element with a geometry differing from the first toggle joint element, in particular with differing lengths of a toggle joint lever, is provided in order to set a different eco-stop position.

By providing different toggle joint elements, the manufacturer of the valve cartridge may let the user decide at which opening rate of the valve the counter force of the toggle joint mechanism should start. Or otherwise said: the user may choose its preferred eco-stop position.

The valve cartridge according to the invention may be any kind of valve cartridge having a swiveling actuating lever for opening and closing a valve of the valve cartridge.

For example, the invention may be implemented independent of the actual valve mechanism such as a ceramic disc valve or another valve closing mechanism.

In particular, the invention may even be used on a single-lever mixer valve cartridge. For example, the stop indentation for the toggle joint element may be provided at the lever support part, which rotates together with the actuating lever in case of a single-lever mixer.

### BRIEF DESCRIPTION OF THE DRAWINGS

Various features and advantages of the present invention may be more readily understood with reference to the following detailed description taken in conjunction with the accompanying drawings in which:
- Figure 1: shows perspective view of a valve cartridge for a sanitary fitting;
- Figure 2: shows a perspective exploded view of the three main components according to the invention, namely an actuating lever, a toggle joint element and a lever support part forming a toggle joint;
- Figure 3a: a partially cut side view of the valve cartridge with the actuating lever in a closed position;
- Figure 3b: a zoomed view of the encircled part of Figure 3a;
- Figure 4a: a partially cut side view of the valve cartridge with the actuating lever in a partially open eco-stop position;
- Figure 4b: a zoomed view of the encircled part of Figure 4a;
- Figure 5a: a partially cut side view of the valve cartridge with the actuating lever in a fully open position;
- Figure 5b: a zoomed view of the encircled part of Figure 5b;

### DETAILED DESCRIPTION OF PREFERRED EMBODIMENTS

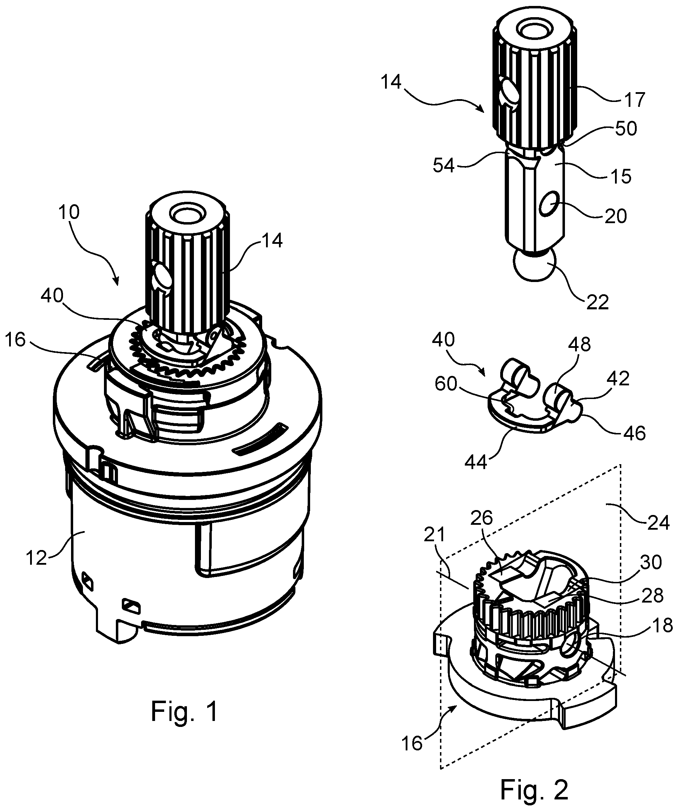

Fig. 1 shows a valve cartridge 10, in particular a single-lever mixer valve cartridge, comprising a housing 12 and an actuating lever 14 protruding from the housing 12.

The actuating lever 14 comprises a shaft portion 15 which in the present example has a rounded quadratic cross section. On its protruding end the actuating lever 14 comprises a toothed head portion 17 for assembly of a handle of a sanitary fitting. The head portion 17 has a generally circular cross section with a larger diameter than the shaft portion 15.

The housing 12 comprises a lever support part 16. As can be seen in Fig. 2, the lever support part 16 comprises a support hole 18 which in an assembled state of the valve cartridge aligns with a swivel hole 20 of the actuating lever 14. By inserting a bolt (not shown) into the support hole 18 and the swiveling hole 20 the actuating lever 14 is supported such that the actuating lever 14 may be swiveled about a swiveling axis 21 in order to move a control disc inside the valve cartridge 12 in the usual way via its control disc end 22.

Because the shown valve cartridge 10 is a single-lever mixer valve, the actuating lever 14 may also be used to rotate the lever support part 16 as well as the control disc inside the housing 12.

For the present invention only the swiveling motion of the actuating lever 14 in a swiveling plane 24 is of importance.

The lever support part 16 of the valve cartridge 10 further comprises glide surfaces 26 on each side of the actuating lever 14 pointing towards the part of the actuating lever 14 protruding from the lever support part 16.

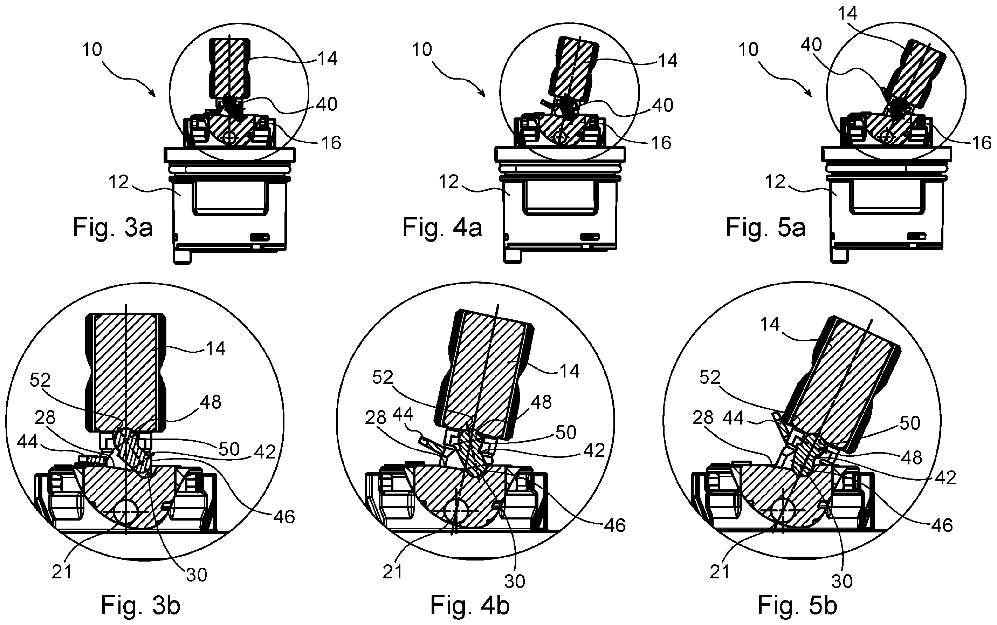

The glide surfaces 26 pointing towards the protruding part of the actuating lever 14 extend parallel to the swiveling plane 24. From a side view (compare Figs. 3b, 4b and 5b) it can be seen, that the glide surfaces 26 first comprise a slope 28 falling off towards an approximately half circular indentation 30, which is placed slightly off center with respect to the swiveling axis 21 of the actuating lever 14.

The perpendicular distance of the center of the indentation 30 from a central axis 32 which crosses the swiveling axis 21 and runs along the actuating lever 14 when the actuating lever 14 is in a upright protruding position is about 2 to 10 mm, in particular in between 3 to 7 mm.

Furthermore, Fig. 2 shows a toggle joint element 40 which may be made of plastics as a one-piece injection-moulded part.

The toggle joint element 40 comprises two toggle joint levers 42. Both toggle joint levers 42 of the toggle joint element 40 are connected via a connecting bracket 44. Thereby the toggle joint element 40 can be clamped on the shaft portion 15 of the actuating lever 14 such that in an assembled state both toggle joint levers 42 are arranged on both sides of the actuating lever 14.

Furthermore, both toggle joint levers 42 have a bone shape with rounded protrusions 46 and 48 on each end. The lower protrusion 46 has a radius, which is complimentary to the indentation 30 of the glide surface 26 of the lever support part 16.

The upper protrusion 48 has a radius complimentary to a round indentation 50 in the head portion 17 of the actuating lever 14 (compare Fig. 3b). The indentation 50 may be produced by drilling a perpendicular blind hole at the shoulder between the shaft portion 15 and the head portion 17 of the actuating lever 14.

When assembled the toggle joint element 40 engages via the upper protrusions 48 with the indentation 50 of the head portion 17 thereby forming a hinge joint around which the toggle joint element 40 may swivel with respect to the actuating lever 14.

The actuating lever 14, the lever support part 16 and the toggle joint element 40 interact to form a toggle joint mechanism which works as follows:
Figs. 3a, 4a and 5a together with the zoomed in Figs. 3b, 4b and 5b show the valve cartridge in three different opening positions.

First, Figs. 3a and 3b show the valve cartridge 10 in a fully closed position wherein the actuating lever 14 points straight upwards, in particular with its longitudinal axis parallel to a rotational axis of the valve cartridge 10.

When the toggle joint element 40 was assembled on the actuating lever 14, the lower protrusion 46 of the toggle joint lever 42 has been gliding down the slope 28 of the glide surface 26 of the lever support part 16 while the upper protrusion 48 of the toggle joint lever 42 engaged with the indentation 50 of the head portion 17 of the actuating lever 14.

In the shown closed position, the toggle joint lever 42 is inclined such that the connecting line 52 between the center of the upper protrusion 48 and the center of the lower protrusion 46 is inclined under an angle of approximately 30° to 50°, in particular in between 35° and 45° with respect to the actuating lever 14. Furthermore, the lower protrusion 46 is now supported approximately at the junction between the slope 28 and the indentation 30.

Figs. 4a and 4b show the valve cartridge 10 in a partially open valve position, also called eco-stop position.

By the swiveling movement of the actuating lever 14 (in the figures to the right) the lower protrusion 46 of the toggle joint lever 42 has slided into the indentation 30. Therefore, both ends of the toggle joint lever 42 are now in full engagement with the indentations 30 and 50 and form a positive locking connection.

As the indentation 30 acts as a stop towards the movement of the lower protrusion 46, the angle between the actuating lever 14 and the connecting line 52 gets smaller. In the eco-stop position, the angle between the connecting line 52 and the actuating lever 14 is in between approximately 10° to 25°, in particular in between 15° to 20°.

Furthermore, the connecting bracket 44 is lifting with the same rotational movement around the upper protrusion 48. The actuating lever 14 may comprise a recess 54 to provide sufficient space into which the connecting bracket 44 may move during its rotational movement.

From this eco-stop position onwards a further swiveling of the actuating lever 14 is only possible against a counterforce which is build up because of the geometric triangle formed by the upper protrusion 48 and the lower protrusion 46 of the toggle joint lever 42 and the swiveling axis 21 between the actuating lever 14 and the lever support part 16.

The actuating lever 14, the toggle joint element 40 and the actuating lever support part 16 thereby form a toggle joint mechanism, wherein a long leg is provided along the actuating lever 14 and two shorter legs are provided by the toggle joint lever 42 and the space between the swivel axis 21 and the indentation 30 of the lever support part 16.

For further swiveling the actuating lever 14, the acting force provided by the user mainly compresses the toggle joint lever 42 of the toggle joint element 40 and works on the play between the support hole 18 and the swiveling hole 20 as well as the play of the engagements of the lower and upper protrusions 46 and 48 in their respective indentations 30 and 50.

Finally, Figs. 5a and 5b show the valve cartridge 10 in a fully open position. In this fully open position the actuating lever 14 contacts a stop edge 56 at the lever support part 16 and the toggle joint mechanism has been moved beyond its dead point position, namely the configuration when the connecting line 52 and the actuating lever 14 are fully aligned.

The lower protrusion 46 of the toggle joint lever 42 is now placed slightly off centered with respect to the axis of the actuating lever 14 on the opposite side compared to the fully closed and the eco-stop positions shown in Figs. 3a, 3b and 4a, 4b.

With regard to the acting forces for the user this means that in order to swivel towards the fully open position the user has to overcome a force maximum at the dead center point position of the toggle joint mechanism. In order to swivel back from the open position towards the eco-stop position and further towards the fully closed position the user again has to overcome the force maximum: Thereby the toggle joint mechanism of the valve cartridge 10 may be toggled from the eco-stop position to the fully open position and vice versa.

If a user does not like the haptics of a eco-stop function the valve cartridge 10 according to the invention may be easily converted to a valve cartridge 10 without an eco-stop function, namely by removing the toggle joint element 40. For this purpose, the connecting bracket 44 of the toggle joint element 40 may comprise a small recess 60, which can be used to place a screw-driver in to easily remove the toggle joint element 40 from the actuating lever 14.

Furthermore, the toggle joint element 40 can always be replaced easily by detaching the old one and inserting a new one sliding down the slope 28 of the glide surface 26.

By providing toggle joint elements 40 with differing geometries, in particular lengths, of the toggle joint lever 42 even the grade of partial opening of the eco-stop position may be set according to user preferences.

## Claims

1. A valve cartridge (10) for a sanitary fitting having
a) a housing (12), in which a valve is arranged,
b) an actuating lever (14) protruding from the housing (12) for opening and closing the valve, wherein the actuating lever (14) is supported in a lever support part (16) of the housing (12) and may be swiveled from a closed position to an open position through an eco-stop position, in which the valve is only partially opened compared to the open position, and may be swiveled back from the open position towards the eco-stop position and further towards the fully closed position,
**characterized in that**
c) the valve cartridge (10) comprises a toggle joint mechanism (14, 42, 30, 50) arranged between the actuating lever (14) and the housing (12), wherein the toggle joint mechanism (14, 42, 30, 50) comprises a dead center point through which the toggle joint mechanism (14, 42, 30, 50) has to move when swiveling the actuating lever (14) from the eco-stop position to the open position, wherein the toggle joint mechanism (14, 42, 30, 50) has a local force maximum within the dead center point and thereby provides a counter force when swivelling the actuating lever (14) from the eco-stop position towards the open position and vice versa.

2. The valve cartridge according to claim 1, wherein the toggle joint mechanism (14, 42, 30, 50) comprises a toggle joint element (40) which is arranged between the actuating lever (14) and the housing (12) and which interacts with the housing (12).

3. The valve cartridge according to claim 2, wherein the toggle joint element (40) interacts with the lever support part (16) of the housing (12).

4. The valve cartridge according to any of the claims 2 to 3, wherein the housing comprises a glide surface (26, 28, 30) for the toggle joint element (40).

5. The valve cartridge according to any of the claims 2 to 4, wherein the toggle joint element (40) comprises at least one toggle joint lever (42) which together with the actuating lever (14) and the housing (12) forms the toggle joint mechanism (14, 42, 30, 50).

6. The valve cartridge according to claim 5, wherein in the eco-stop position the actuating lever (14), the toggle joint lever (42) and a stop indentation (30) provided at the housing (12), which stop indentation (30) acts as a stop for the movement of the toggle joint lever (42), are arranged in a geometric triangle such that a counter force against an acting force of the user is provided.

7. The valve cartridge according to one of the claims 5 to 6, wherein the toggle joint element (40) comprises two toggle joint levers (42) arranged on opposing sides of the actuating lever (14).

8. The valve cartridge according to claim 7, wherein the two toggle joint levers (42) are connected by a connecting bracket (44).

9. The valve cartridge according to claim 8, wherein the connecting bracket (44) comprises a tool recess (60) for inserting a tool, in particular a screw driver.

10. The valve cartridge according to any of the claims 2 to 9, wherein a second toggle joint element (40) with a geometry differing from the first toggle joint element (40), in particular with differing lengths of the toggle joint lever (42), is provided in order to set a different eco-stop position.

## Patentansprüche

1. Eine Ventilkartusche (10) für eine Sanitärarmatur mit
a) einem Gehäuse (12), in dem ein Ventil angeordnet ist,
b) einem aus dem Gehäuse (12) herausragenden Betätigungshebel (14) zum Öffnen und Schließen des Ventils, wobei der Betätigungshebel (14) in einem Hebelstützteil (16) des Gehäuses (12) gelagert ist und von einer Schließstellung über eine Öko-Stopp-Stellung in eine Offenstellung verschwenkbar ist, wobei in der Öko-Stopp-Stellung das Ventil gegenüber der Offenstellung nur teilweise geöffnet ist,
**dadurch gekennzeichnet, dass**
c) die Ventilkartusche (10) einen Kniehebelmechanismus (14, 42, 30, 50) aufweist, der zwischen dem Betätigungshebel (14) und dem Gehäuse (12) angeordnet ist, wobei der Kniehebelmechanismus (14, 42, 30, 50) einen Totpunkt aufweist, durch den sich der Kniehebelmechanismus (14, 42, 30, 50) beim Verschwenken des Betätigungshebels (14) von der Öko-Stopp-Stellung in die Offenstellung bewegen muss, wobei der Kniehebelmechanismus (14, 42, 30, 50) ein lokales Kraftmaximum in dem Totpunkt hat und dadurch eine Gegenkraft bereitstellt, wenn der Betätigungshebel (14) von der Öko-Stopp-Stellung in die Offenstellung und umgekehrt geschwenkt wird.

2. Die Ventilkartusche nach Anspruch 1, wobei der Kniehebelmechanismus (14, 42, 30, 50) ein Kniehebelelement (40) umfasst, das zwischen dem Betätigungshebel (14) und dem Gehäuse (12) angeordnet ist und das mit dem Gehäuse (12) zusammenwirkt.

3. Die Ventilkartusche nach Anspruch 2, wobei das Kniehebelelement (40) mit dem Hebelstützteil (16) des Gehäuses (12) in Wechselwirkung steht.

4. Die Ventilkartusche nach einem der Ansprüche 2 bis 3, wobei das Gehäuse eine Gleitfläche (26, 28, 30) für das Kniehebelelement (40) aufweist.

5. Die Ventilkartusche nach einem der Ansprüche 2 bis 4, wobei das Kniehebelelement (40) mindestens einen Kniehebelarm (42) aufweist, der zusammen mit dem Betätigungshebel (14) und dem Gehäuse (12) den Kniehebelmechanismus (14, 42, 30, 50) bildet.

6. Die Ventilkartusche nach Anspruch 5, wobei in der Öko-Stopp-Stellung der Betätigungshebel (14), der Kniehebelarm (42) und eine am Gehäuse vorgesehene Anschlagsvertiefung (30) in einem geometrischen Dreieck angeordnet sind, wobei die Anschlagsvertiefung (30) als Anschlag für die Bewegung des Kniehebelarms (42) wirkt, so dass eine Gegenkraft gegen eine einwirkende Kraft des Benutzers gegeben ist.

7. Die Ventilkartusche nach einem der Ansprüche 5 bis 6, wobei das Kniehebelelement (40) zwei Kniehebelarme (42) aufweist, die auf gegenüberliegenden Seiten des Betätigungshebels (14) angeordnet sind.

8. Die Ventilkartusche nach Anspruch 7, wobei die beiden Kniehebelarme (42) durch einen Verbindungsbügel (44) verbunden sind.

9. Die Ventilkartusche nach Anspruch 8, wobei der Verbindungsbügel (44) eine Werkzeugausnehmung (60) zum Einsetzen eines Werkzeugs, insbesondere eines Schraubendrehers.

10. Die Ventilkartusche nach einem der Ansprüche 2 bis 9, wobei zum Einstellen einer anderen Öko-Stopp-Stellung ein zweites Kniehebelelement (40) mit einer vom ersten Kniehebelelement (40) abweichenden Geometrie, insbesondere mit unterschiedlichen Längen des Kniehebelarms (42), vorgesehen ist.

## Revendications

1. Cartouche de robinet (10) pour un raccord sanitaire ayant
a) un logement (12) dans lequel un robinet est agencé,
b) un levier d'actionnement (14) faisant saillie depuis le logement (12) pour ouvrir et fermer le robinet, dans laquelle le levier d'actionnement (14) est supporté dans une partie de support de levier (16) du logement (12) et peut être pivoté d'une position fermée à une position ouverte à travers une position éco-stop dans laquelle le robinet est uniquement partiellement ouvert par rapport à la position ouverte, et peut être pivoté en retour de la position ouverte vers la position éco-stop et plus loin vers la position entièrement fermée,
**caractérisée en ce que**
c) la cartouche de robinet (10) comprend un mécanisme de genouillère (14, 42, 30, 50) agencé entre le levier d'actionnement (14) et le logement (12), dans laquelle le mécanisme de genouillère (14, 42, 30, 50) comprend un point mort à travers lequel le mécanisme de genouillère (14, 42, 30, 50) doit se déplacer lors du pivotement du levier d'actionnement (14) de la position éco-stop à la position ouverte, dans laquelle le mécanisme de genouillère (14, 42, 30, 50) a un maximum de force locale au sein du point mort et fournit de ce fait une contre-force lors du pivotement du levier d'actionnement (14) de la position éco-stop vers la position ouverte et vice versa.

2. Cartouche de robinet selon la revendication 1, dans laquelle le mécanisme de genouillère (14, 42, 30, 50) comprend un élément de genouillère (40) qui est agencé entre le levier d'actionnement (14) et le logement (12), et qui interagit avec le logement (12).

3. Cartouche de robinet selon la revendication 2, dans laquelle l'élément de genouillère (40) interagit avec la partie de support de levier (16) du logement (12).

4. Cartouche de robinet selon l'une quelconque des revendications 2 à 3, dans laquelle le logement comprend une surface glissante (26, 28, 30) pour l'élément de genouillère (40).

5. Cartouche de robinet selon l'une quelconque des revendications 2 à 4, dans laquelle l'élément de genouillère (40) comprend au moins un levier de genouillère (42) qui forme le mécanisme de genouillère (14, 42, 30, 50) conjointement au levier d'actionnement (14) et au logement (12).

6. Cartouche de robinet selon la revendication 5, dans laquelle le levier d'actionnement (14), le levier de genouillère (42) et une indentation de butée (30) prévue au niveau du logement (12), laquelle indentation de butée (30) agit comme une butée pour le mouvement du levier de genouillère (42), sont agencés dans la position éco-stop en un triangle géométrique de sorte qu'une contre-force contre une force active de l'utilisateur est fournie.

7. Cartouche de robinet selon une des revendications 5 à 6, dans laquelle l'élément de genouillère (40) comprend deux leviers de genouillère (42) agencés sur des côtés opposés du levier d'actionnement (14).

8. Cartouche de robinet selon la revendication 7, dans laquelle les deux leviers de genouillère (42) sont connectés par un support de connexion (44).

9. Cartouche de robinet selon la revendication 8, dans laquelle le support de connexion (44) comprend un retrait d'outil (60) pour insérer un outil, notamment un tournevis.

10. Cartouche de robinet selon l'une quelconque des revendications 2 à 9, dans laquelle un second élément de genouillère (40) avec une géométrie différant du premier élément de genouillère (40), notamment avec différentes longueurs du levier de genouillère (42), est prévu afin de régler une position éco-stop différente.
